Europäisches Patentamt

European Patent Office

Office européen des brevets

(11) Veröffentlichungsnummer: **0 372 112**
**A1**

## EUROPÄISCHE PATENTANMELDUNG

(21) Anmeldenummer: **88120460.6**

(22) Anmeldetag: **07.12.88**

(51) Int. Cl.5: **G01N 27/72**

(43) Veröffentlichungstag der Anmeldung:
**13.06.90 Patentblatt 90/24**

(84) Benannte Vertragsstaaten:
**DE FR GB SE**

(71) Anmelder: **Siemens Aktiengesellschaft**
**Wittelsbacherplatz 2**
**D-8000 München 2(DE)**

(72) Erfinder: **Hofer, Gerhard, Dr.**
**Hauptstrasse 1**
**D-8551 Röttenbach(DE)**

(54) **Verfahren und Einrichtung zur Messung mechanischer Eigenspannungen eines ferromagnetischen Körpers.**

(57) Die Erfindung betrifft ein Verfahren und eine Einrichtung zur Messung mechanischer Eigenspannungen ($\sigma_R$) eines Körpers (1) aus ferromagnetischem Werkstoff. Es ist vorgesehen, daß ein sinusförmiges Magnetfeld an einem Ort (x = 0, y = 0) des Körpers (1) erzeugt wird. An zwei Meßorten (x', y' = 0) und (x = 0, y'), die bezüglich dieses Ortes einen Winkelabstand von 90° haben, werden jeweils die Amplitude der dritten harmonischen Komponente (i) der Induktion am Körper (1) gemessen. Zu beiden Amplituden werden zugehörige Kurven (51, 52, 53; 61, 62, 63) aus zwei Kurvenscharen (5 und 6) herausgesucht. Dann wird der Schnittpunkt (91, 92, 93) der beiden Kurven (51, 52, 53) und (61, 62, 63) bestimmt. Der Abszissenwert des Schnittpunktes (91, 92, 93) wird als Meßwert der mechanischen Eigenspannung ($\sigma_R$) registriert, und zwar in der durch eine Verbindungslinie durch den Ort des sinusförmigen Magnetfeldes und durch den ersten Meßort bestimmten Richtung. Die Einrichtung zur Durchführung des Verfahrens weist neben einer Erregerspule (2) zwei Meßspulen (3 und 4) auf, deren Achsen parallel zur Achse der Erregerspule (2) ausgerichtet sind. Eine Auswertelogik (12) wertet die gefilterten Meßsignale ($a_3$ und $a_4$) aus.

FIG 5

# Verfahren und Einrichtung zur Messung mechanischer Eigenspannungen eines ferromagnetischen Körpers

Die Erfindung betrifft ein Verfahren und eine Einrichtung zur Messung der mechanischen Eigenspannung eines Körpers aus ferromagnetischem Werkstoff. Sie bezieht sich insbesondere auf die zerstörungsfreie Prüfung von Turbinenschaufeln.

Ferromagnetische Werkstoffe werden beispielsweise zum Bau von Turbinenschaufeln verwendet. Auch andere ferromagnetische Bauteile sind in der Technik im Einsatz. Um Defekte in der Materialstruktur dieser Bauteile frühzeitig zu erkennen, werden auf dem Gebiet der Werkstoffprüfung mechanische Eigenspannungen des ferromagnetischen Bauteils lokalisiert und gemessen.

Viele bisher bekannte Verfahren zur Lokalisierung und Messung der Eigenspannungen eines ferromagnetischen Körpers oder Bauteiles sind mit einer Zerstörung einer Probe desselben verbunden. Solche Verfahren sind daher für eine regelmäßige Überprüfung der Bauteile wenig geeignet; darüber hinaus sind sie meist aufwendig. Diesem Verfahren stehen zerstörungsfrei arbeitende Verfahren zur Messung mechanischer Eigenspannungen gegenüber. Bei solchen Verfahren wird das betreffende Bauteil beispielsweise durch Einstrahlung von Ultraschall oder Röntgenstrahlen untersucht. Bei beiden Verfahrensarten wird eine hohe Meßgenauigkeit angestrebt. Ein weiteres Verfahren zur zerstörungsfreien Messung von Eigenspannungen verwendet das Akustische Barkhausenrauschen (W. A. Theiner und P. Höller, Magnetische Verfahren zur Spannungsermittlung, HTM-Beiheft "Eigenspannungen und Lastspannungen", Carl Hauser Verlag, München (1982), Seiten 156-163).

Es ist prinzipiell bekannt (C. Kittel, Physical Theory of Ferromagnetic Domains, Rev. Mod. Phys. 21 (1949), p. 541), daß die magnetischen Eigenschaften eines ferromagnetischen Materials, wie z. B. die Hysterese, durch mechanische Spannungen infolge magnetoelastischer Wechselwirkung beeinflußt werden.

Wenn zum Beispiel ein sinusförmiges magnetisches Feld auf ein ferromagnetisches Material einwirkt, dann ist die resultierende magnetische Induktion nicht exakt sinusförmig, sondern demgegenüber verzerrt. Ein Grund für die Verzerrung sind die magnetische Hysterese und die nichtlineare Permeabilität des Materials. Die verzerrte Induktion enthält harmonische Komponenten, die von der Hysterese abhängig sind.

Es gibt auch experimentelle Untersuchungen über die Abhängigkeit der dritten harmonischen Komponente der magnetischen Induktion, die bei einer Einwirkung eines sinusförmigen Erregerfeldes auf einen Werkstoff entsteht, und zwar von der angelegten mechanischen Spannung und von dem Werkstoffzustand (H. Kwun, G. L. Burkhardt; Nondestructive measurement of stress in ferromagnetic steels using harmonic analysis of induced voltage; NDT International, Volume 20, Number 3, June 1987). In diesen Untersuchungen wurde gezeigt, daß in einem eigenspannungsfreien Werkstoff die dritte harmonische Amplitude, die parallel zum Lastspannungsfeld gemessen wird, mit steigender Lastspannung steigt; die senkrecht zum Lastspannungsfeld gemessene dritte harmonische Amplitude fällt dagegen mit steigender Lastspannung ab. In diesem Fall liegt der Kreuzungspunkt der beiden so ermittelten Last-Amplituden-Kurven bei Null. Eine im Material vorhandene Zug-Eigenspannung verschiebt den Kreuzungspunkt nach links, während eine Druck-Eigenspannung den Kreuzungspunkt nach rechts verschiebt.

Die Erfindung beruht auf der Überlegung, daß die Abhängigkeit einer harmonischen Komponente der magnetischen Induktion, insbesondere der dritten harmonischen Komponente, von der angelegten mechanischen Spannung zur zerstörungsfreien Messung von mechanischen Spannungen, insbesondere von Eigenspannungen, herangezogen werden kann. Zu berücksichtigen ist dabei, daß die harmonische Komponente nicht nur von der angelegten Spannung, sondern auch vom Werkstoffzustand beeinflußt ist.

Der Erfindung liegt die Aufgabe zugrunde, ein Verfahren zur Messung der mechanischen Eigenspannungen in einem ferromagnetischen Werkstoff anzugeben, das zerstörungsfrei und berührungslos arbeitet und das sowohl den Betrag einer beliebigen Komponente der mechanischen Eigenspannung im Werkstoff als auch deren Richtung mit hoher Genauigkeit zu erfassen gestattet. Auch soll eine Einrichtung zur Durchführung des Verfahrens angegeben werden.

Die erstgenannte Aufgabe wird erfindungsgemäß dadurch gelöst, daß folgende Verfahrensschritte durchgeführt werden:

a) es wird ein sinusförmiges Magnetfeld an einem Ort des ferromagnetischen Körpers erzeugt;

b) es wird an zwei Meßorten, die bezüglich dieses Ortes voneinander einen Winkelabstand von 90° haben, jeweils die Amplitude der dritten harmonischen Komponente der Induktion am Körper gemessen;

c) zur ersten dieser Amplituden wird eine zugehörige erste Kurve aus einer ersten vorgegebenen einer ersten Meßrichtung zugeordneten, die dritte harmonische Komponente der Induktion in Abhängigkeit von der mechanischen Spannung darstellenden Kurvenschar und zur zweiten dieser Amplituden wird eine zugehörige zweite Kurve aus einer zweiten vorgegebenen einer zweiten Meßrichtung zugeordneten, die dritte harmonische Komponente der Induktion in Abhängigkeit von der mechanischen Spannung darstellenden Kurvenschar herausgesucht;

d) es wird der Schnittpunkt der ersten Kurve mit der zweiten Kurve bestimmt und

e) es wird von einem vorgegebenen Abszissenwert ($\sigma = 0$) aus der Abszissenwert des Schnittpunktes bestimmt als Meßwert für die Größe der mechanischen Eigenspannung in der durch eine Verbindungslinie durch den Ort des sinusförmigen Magnetfeldes und durch den ersten Meßort festgelegten Richtung.

Die Auswahl des ersten Meßortes ist abhängig davon, welche Eigenspannungskomponente im untersuchten Körper zu ermitteln ist. Häufig ist bei Bauteilen, die eine bestimmte Form und bestimmte Abmessungen haben, nur eine Messung der Eigenspannungskomponente in einer bestimmten Richtung, beispielsweise in Richtung der größten Erstreckung des Bauteiles, erforderlich.

Die gemessenen Amplitudenwerte werden in einem gemeinsamen Koordinatensystem von zwei Scharen von Kalibrierkurven als erster und zweiter Ordinatenwert auf der Ordinate eingetragen. Die Scharen von Kalibrierkurven zeigen den Verlauf der Amplituden der dritten harmonischen Komponenten der magnetischen Induktionen an einer Probe des Werkstoffes abhängig von bekannten von außen aufzubringenden mechanischen Spannungen an. Dabei zeigt die erste Schar von Kalibrierkurven den Verlauf der Amplitude parallel zur angelegten mechanischen Spannung gemessen. Die zweite Kalibrierkurve zeigt den Verlauf der Amplitude senkrecht zur angelegten mechanischen Spannung gemessen. Zum Bestimmen des Betrages der mechanischen Eigenspannung wird der Schnittpunkt bestimmt von einer Kalibrierkurve der ersten Schar durch den ersten Ordinatenwert und einer Kalibrierkurve der zweiten Schar durch den zweiten Ordinatenwert. Der Abszissenwert dieses Schnittpunktes wird als Betrag der mechanischen Eigenspannung registriert.

Die magnetischen Eigenschaften eines ferromagnetischen Materials, beispielsweise die Hysterese, werden aufgrund magnetoelastischer Verknüpfungen durch mechanische Spannungen beeinflußt. Wenn beispielsweise ein sinusförmiges magnetisches Feld auf ferromagnetisches Material aufgebracht wird, dann ist die resultierende magnetische Induktion nicht sinusförmig, sondern verzerrt. Gründe für die Verzerrung sind die magnetische Hysterese und die Permeabilität des Materials, die nicht linear ist. Die verzerrte Welle der resultierenden magnetischen Induktion enthält aber von der Hysterese abhängige harmonische Komponenten.

Es ist bereits festgestellt worden, daß die dritte der harmonischen Komponenten der resultierenden magnetischen Induktion von der mechanischen Spannung eines untersuchten ferromagnetischen Bauteiles abhängt. Die Amplitude der dritten harmonischen Komponente, gemessen an einem Ort in Richtung der mechanischen Spannung vom Erzeugungsort des sinusförmigen Magnetfeldes entfernt, wächst mit steigender Spannung. Die Amplitude der dritten harmonischen Komponente der magnetischen Induktion gemessen an einem Ort, der senkrecht zur Richtung der mechanischen Spannung entfernt ist, fällt mit steigender Spannung. Die beiden Funktionen weisen daher einen Kreuzungspunkt auf.

In einem Koordinatensystem, auf dessen Abszisse die mechanische Spannung und auf dessen Ordinate die Amplitude der dritten harmonischen Komponente der gemessenen Indukion aufgetragen ist, hat der Kreuzungspunkt den Abszissenwert Null, falls das Material des Bauteiles eine mechanische Eigenspannung nicht aufweist. Falls jedoch eine mechanische Eigenspannung gegeben ist, verschiebt sich der genannte Kreuzungspunkt in Richtung der Abszisse. Dieser Effekt wird erfindungsgemäß zur Messung mechanischer Eigenspannungen in ferromagnetischem Material eingesetzt.

Liegt eine mechanische Eigenspannung nicht vor, dann sind die Amplituden der dritten harmonischen Komponente der magnetischen Induktion an beiden Meßorten gleich groß und liegen am Abszissenwert Null.

Falls jedoch eine mechanische Eigenspannung vorhanden ist, unterscheiden sich für die beiden Meßorte die Werte der Amplituden der dritten harmonischen Komponente der magnetischen Induktion am Abszissenwert Null voneinander, ohne daß äußere Spannungen gegeben sind. Für den Abszissenwert Null ergeben sich zwei differierende Ordinatenwerte.

Zum Bestimmen des Betrages der mechanischen Eigenspannung werden die beiden Amplitudenwerte der dritten harmonischen Komponenten der Induktion für eine ausgewählte Spannungsrichtung und für die senkrecht dazu stehende Richtung herangezogen.

Zunächst sind aber Scharen von Kalibrierkurven erforderlich, die für das Bauteil aus dem zu überprüfenden ferromagnetischen Material zuvor festgelegt werden. Dazu wird für das zu prüfende Bauteil in Abhängigkeit von bekannten äußeren mechanischen Spannungen, die auf das Bauteil einwirken, als erste Schar von Kalibrierkurven der Verlauf der Amplitude der dritten harmonischen Komponente der magnetischen Induktion an einem Ort, der in Richtung der äußeren Spannung vom Erzeugungsort des sinusförmigen Magnetfeldes entfernt ist, bestimmt. Als zweite Schar von Kalibrierkurven wird der Verlauf der Amplitude an einem Ort, der senkrecht zur Richtung der äußeren Spannung entfernt ist, bestimmt. Diese Kalibriermessungen erfolgen in einem von Eigenspannungen freien Werkstoffteil.

In einem geschilderten Koordinatensystem werden die beiden Scharen von Kalibrierkurven eingetragen.

Daraufhin werden die beiden gemessenen Amplitudenwerte der dritten harmonischen Komponenten der Induktion im Koordinatensystem der Kalibrierkurven auf der Ordinate eingetragen. Durch den Ordinatenwert für die Amplitude in der ausgewählten Spannungsrichtung wird eine Kurve aus der ersten Kurvenschar gelegt. Durch den Ordinatenwert für die Amplitude senkrecht zur ausgewählten Spannungsrichtung wird eine Kurve aus der zweiten Kurvenschar gelegt. Die beiden Kurven durch die Ordinatenwerte bilden einen Schnittpunkt. Der Abszissenwert dieses Schnittpunktes im Koordinatensystem der Scharen von Kalibrierkurven entspricht dem Betrag der mechanischen Eigenspannung. Falls die Größe der mechanischen Eigenspannung negativ ist, liegt eine Druckeigenspannung vor, und falls sie positiv ist, liegt eine Zugeigenspannung vor.

Mit dem erfindungsgemäßen Verfahren wird der Vorteil erzielt, daß nach Durchführung einer Kalibriermeßreihe Betrag und Größe von Komponenten mechanischer Eigenspannungen in ferromagnetischem Material eindeutig zu bestimmen sind.

Zum genauen Bestimmen der Richtung der mechanischen Haupteigenspannung in einem Körper aus ferromagnetischem Material werden beispielsweise die Meßorte relativ zum Erzeugungsort des sinusförmigen Magnetfeldes unter Beibehaltung des Winkelabstandes von 90˚ gedreht, bis an einem der Meßorte ein Maximum der dritten harmonischen Komponente der magnetischen Induktion und an dem anderen ein Minimum registriert wird. Die durch den Erzeugungsort des sinusförmigen Magnetfeldes und durch den Ort des Maximums bestimmte Richtung wird als Richtung der mechanischen Eigenspannung registriert.

Das sinusförmige Magnetfeld wird beispielsweise durch eine Erregerspule erzeugt.

Zum Bestimmen der magnetischen Induktionen werden beispielsweise die Induktionsspannungen mit Meßspulen gemessen.

Eine Einrichtung zur Durchführung des genannten Verfahrens ist erfindungsgemäß gekennzeichnet durch eine Erregerspule, die an das zu prüfende Bauteil (Körper) heranführbar ist. Dieser Erregerspule sind zwei Meßspulen zugeordnet, die bezüglich der Achse der Erregerspule einen Winkelabstand von 90˚ haben und deren Achsen parallel zur Achse der Erregerspule ausgerichtet sind. Die Meßspulen sind z.B. bei gleichbleibendem Winkelabstand um die Längsachse der Erregerspule herum drehbar. Die Meßspulen sind beispielsweise über Filter, die nur die dritte harmonische Komponente der magnetischen Induktion durchlassen, mit einer Auswertelogik verbunden, die z.B. ein Computer ist. Die Auswertelogik steht mit einem Darstellungsgerät in Verbindung.

Zur Steuerung einer Bewegung der Meßspulen und entsprechender Darstellung sind diese und auch die Erregerspule und das Darstellungsgerät mit einem Positioniergerät verbunden.

Mit der geschilderten Einrichtung ist das erfindungsgemäße Verfahren zur Messung mechanischer Eigenspannungen eines Bauteiles aus ferromagnetischem Werkstoff schnell und zuverlässig durchführbar.

Mit der Erfindung wird insbesondere der Vorteil erzielt, daß nur mit einfachen Mitteln durchführbare Messungen von Induktionsspannungen erforderlich sind, um mittels einfach zu erstellender Kalibrierkurven sowohl die Größe als auch die Richtung von mechanischen Eigenspannungen in Bauteilen aus ferromagnetischem Material zu bestimmen.

Die Erfindung wird anhand eines in der Zeichnung wiedergegebenen Ausführungsbeispieles näher erläutert:

FIG 1 zeigt den prinzipiellen Aufbau einer Einrichtung zur Messung mechanischer Eigenspannungen in einem ferromagnetischen Körper;

FIG 2 zeigt ein elektrisches Schaltbild einer solchen Einrichtung;

FIG 3-6 zeigen jeweils in einem Koordinatensystem die Amplitude der dritten harmonischen Komponente der magnetischen Induktion in Abhängigkeit von der mechanischen Spannung;

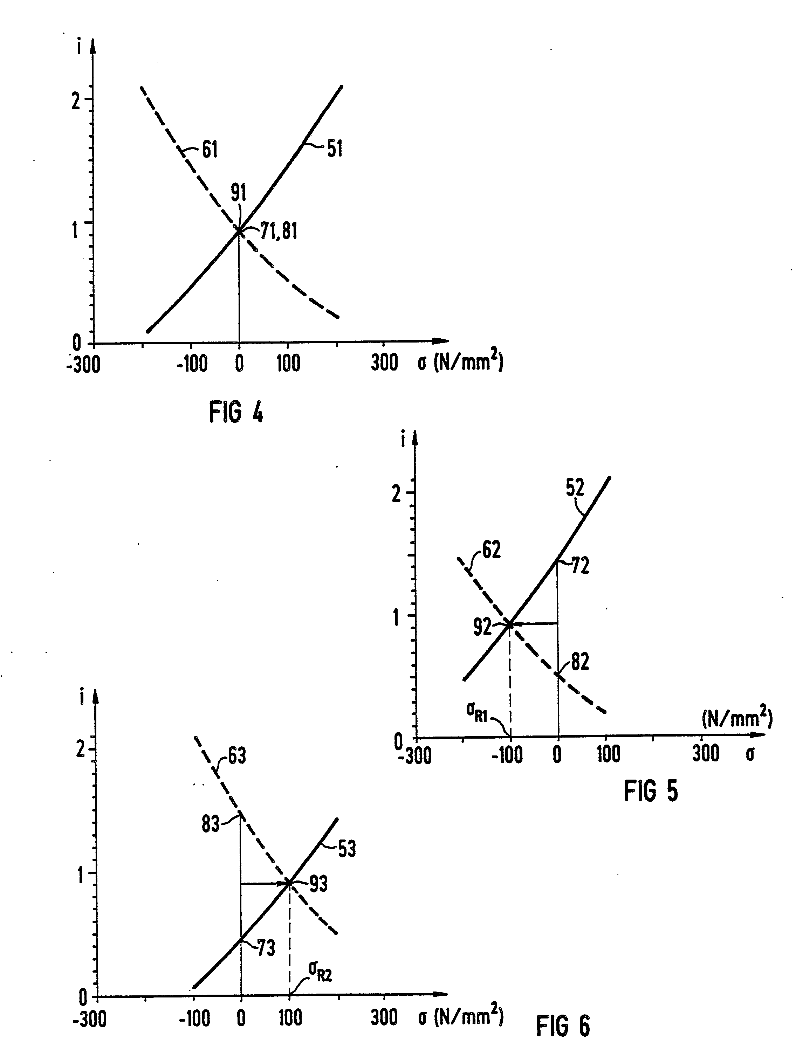

FIG 3 zeigt Kalibrierkurvenscharen;

FIG 4 zeigt Meßwerte im von Eigenspannungen freien Zustand.

FIG 5 zeigt Meßwerte bei Zugeigenspannung.

FIG 6 zeigt Meßwerte bei Druckeigenspannung.

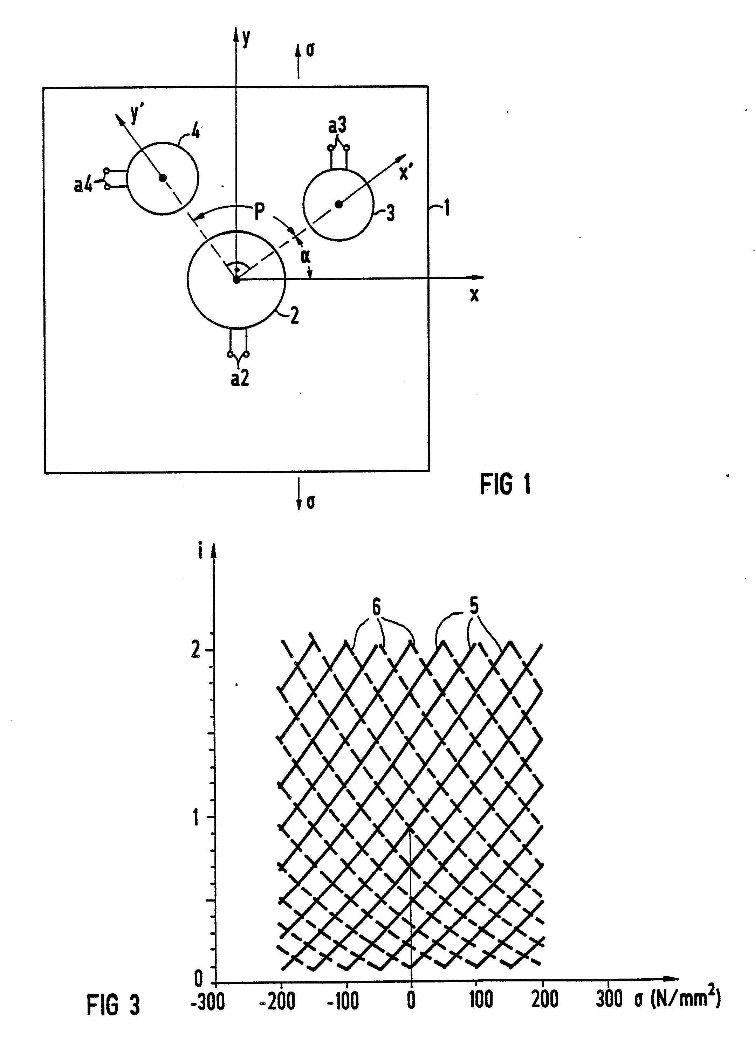

Nach FIG 1 weist der Prüfkopf einer Einrichtung zum Bestimmen der mechanischen Eigenspannungen in einem ferromagnetischen Körper 1, z.B. in einer Turbinenschaufel, eine Erregerspule 2 auf. Diese ist im Ursprung eines Koordinatensystems x, y angeordnet, wobei x und y definierte Richtungen im Körper 1 bilden sollen. An ihr liegt die Spannung $a_2$ an. Parallel zur Erregerspule 2 ausgerichtet sind möglichst eng an der Erregerspule 2 und am Körper 1 zwei Meßspulen 3 und 4 angeordnet, die bezüglich der Achse der Erregerspule 2 einen Winkelabstand von 90˚ haben. Sie liegen auf den Achsen x' bzw. y', die bezüglich der Achsen x, y einen Winkel α einschließen. Die Meßspulen 3 und 4 sind relativ zur Erregerspule 2 unter Beibehaltung des Winkelabstandes 90° gemeinsam um diese herumzubewegen. Dies ist durch einen Doppelpfeil P gekennzeichnet. Die Erregerspule 2 wird mit einer sinusförmigen Wechselspannung beaufschlagt, so daß im ferromagnetischen Körper 1 ein sinusförmiges Magnetfeld entsteht. Der Bereich homogener Erregung geht bis in den Bereich der Meßspulen 3 und 4. Von den Meßspulen 3 und 4 gehen die Meßsignale $a_3$ und $a_4$ aus.

Die Einheit der Spulen 2, 3, 4 ist bevorzugt in x- und/oder y-Richtung verschiebbar.

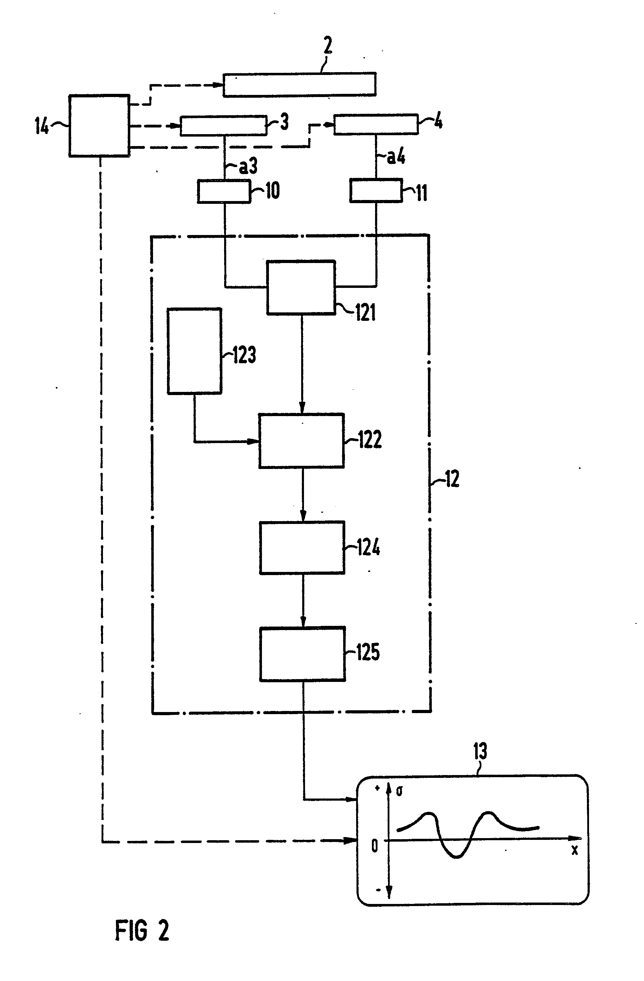

Die Meßspulen 3 und 4, von denen die Meßsi-gnale $a_3$ und $a_4$ ausgehen, sind nach FIG 2 über Filter 10 und 11 jede mit einer Auswertelogik 12 verbunden. Die Filter 10 und 11 lassen nur die dritte harmonische Komponente i der magnetischen Induktion durch. Die Ausgänge der Filter 10 und 11 stehen dort beide mit einem Vergleichsglied 121 in Verbindung, in dem die Werte für die dritte harmonische Komponente i der Induktion verglichen werden. Das Vergleichsglied 121 ist ausgangsseitig mit einer Auswahlstufe 122 verbunden, an die auch ein Speicher 123 für Kalibrierkurven angeschlossen ist. Der Ausgang der Auswahlstufe 122 steht über ein Glied 124 zur Bestimmung des Schnittpunktes 91, 92, 93 der ausgewählten Kalibrierkurven mit einer Zuordnungsstufe 125 in Verbindung, in der der für die mechanische Eigen-spannung $\sigma_R$ stehende Abszissenwert des Schnittpunktes 91, 92, 93 (FIG 4, 5 und 6) bestimmt wird. Der Ausgang der Zuordnungsstufe 125 bildet den Ausgang der Auswertelogik 12, der mit einem Darstellungsgerät 13, beispielsweise mit einem Bildschirm, verbunden ist. Zur Positionierung der Meßspulen 3 und 4 relativ zum zu untersuchenden Körper 1 sind die Meßspulen 3 und 4 und die Erregerspule 2 mit einem Positioniergerät 14 verbunden. Das Darstellungsgerät 13 erhält von diesem ein Positioniersignal. Auf dem Darstellungsgerät 13 lassen sich die Eigenspannungen $\sigma_R(x)$, $\sigma_R$-(y) oder $\sigma_R(x,y)$ darstellen.

Mit dieser geschilderten Einrichtung werden nach FIG 3 Scharen von Kalibrierkurven 5 und 6 für die dritte harmonische Komponente i der magnetischen Induktion ermittelt. Die erste Schar 5 zeigt den Verlauf der Amplitude der dritten harmonischen Komponente i der Induktion in Richtung einwirkender mechanischer Spannungen σ und in Abhängigkeit von der Größe dieser Spannungen σ. Entsprechend zeigt die zweite Schar 6 den Verlauf der Amplitude der dritten harmonischen Komponente i der magnetischen Induktion senkrecht zu einwirkenden mechanischen Spannungen σ und in Abhängigkeit von der Größe dieser Spannungen σ. Bei der Aufstellung beider Scharen 5 und 6 sind Eigenspannungen des Körpers 1 nicht vorhanden.

Zur Messung unbekannter mechanischer Ei-genspannungen $\sigma_R$ im Körper 1, der zuvor einer Kalibrierung unterworfen wurde, wird nach den FIG 4, 5 und 6 die Amplitude 71, 72, 73 der dritten harmonischen Komponente i der in der ausgewählten Spannungsrichtung gemessenen magnetischen Induktion bestimmt. Außerdem wird senkrecht dazu die Amplitude 81, 82, 83 der dritten harmonischen Komponente i der magnetischen Induktion bestimmt.

Beide Amplitudenwerte 71, 72, 73 und 81, 82, 83 werden auf der Ordinate des Koordinatensystems (σ, i) bei σ = 0 eingetragen. Durch den Wert 71, 72, 73 wird eine Kalibrierkurve 51, 52, 53 aus der ersten Schar 5 und durch den Wert 81, 82, 83 eine Kalibrierkurve 61, 62, 63 aus der zweiten Schar 6 gelegt. Der Abszissenwert des Schnittpunktes 91, 92, 93 der beiden Kurven 51, 52, 53 und 61, 62, 63 gibt die Größe der mechanischen Eigenspannung $\sigma_R$ an.

Falls nach FIG 4 die Amplituden 71 und 81 gleich groß sind, schneiden sich die Kalibrierkurven 51 und 61 im Schnittpunkt 91 bei σ = 0. Folglich liegt eine Eigenspannung nicht vor ($\sigma_R$ = 0).

Falls nach FIG 5 die Amplitude 72 in der ausgewählten Spannungsrichtung größer ist als die Amplitude 82 senkrecht zur ausgewählten Spannungsrichtung, schneiden sich die Kalibrierkurven 52 und 62 im ersten Quadranten des Koordinatensystems im Schnittpunkt 92. Folglich liegt eine Zugeigenspannung $\sigma_{R1}$ vor, deren Betrag durch den Abszissenwert des Schnittpunktes 92 gegeben ist.

Falls nach FIG 6 die Amplitude 73 in der ausgewählten Spannungsrichtung kleiner ist als die Amplitude 83 senkrecht dazu, schneiden sich die Kalibrierkurven 53 und 63 im vierten Quadranten des Koordinatensystems im Schnittpunkt 93. Folg-lich liegt eine Druckeigenspannung $\sigma_{R2}$ vor, deren Betrag durch den Abszissenwert des Schnittpunktes 93 gegeben ist.

Die Werte $\sigma_{R1}$, $\sigma_{R2}$ beschreiben quantitativ die Größe der Eigenspannung am ausgewählten Meßort x = 0, y = 0 des Körpers 1.

Mit dieser Methode lassen sich Spannungen σ grundsätzlich in jeder beliebigen Richtung α messen. Als Vorteil ist folgendes zu verzeichnen: Durch Drehen der Spulen 3, 4 in Richtung des Doppelpfeiles P, und zwar bis die elektrische Meßspannung an einer der Spulen 3, 4 maximal geworden ist, können die mechanischen Hauptspannungen gemessen werden. In FIG 1 liegen diese z.B. in x'- und in y'-Richtung.

**Ansprüche**

1. Verfahren zur Messung der mechanischen

Eigenspannung ($\sigma_R$) eines Körpers (1) aus ferromagnetischem Werkstoff, **gekennzeichnet** durch folgende Schritte:

a) es wird ein sinusförmiges Magnetfeld an einem Ort (z.B. x = 0, y = 0) des ferromagnetischen Körpers (1) erzeugt;

b) es wird an zwei Meßorten ($x'$, $y'$ = 0) und ($x'$ = 0, $y'$), die bezüglich dieses Ortes (z.B. x = 0, y = 0) voneinander einen Winkelabstand von 90° haben, jeweils die Amplitude (71, 72, 73 und 81, 82, 83) der dritten harmonischen Komponente (i) der Induktion am Körper (1) gemessen;

c) zur ersten dieser Amplituden (71, 72, 73) wird eine zugehörige erste Kurve (51, 52, 53) aus einer ersten vorgegebenen die dritte harmonische Komponente (i) der Induktion in Abhängigkeit von der mechanischen Spannung ($\sigma$) darstellenden Kurvenschar (5) und zur zweiten dieser Amplituden (81, 82, 83) wird eine zugehörige zweite Kurve (61, 62, 63) aus einer zweiten vorgegebenen die dritte harmonische Komponente (i) der Induktion in Abhängigkeit von der mechanischen Spannung ($\sigma$) darstellenden Kurvenschar (6) herausgesucht, wobei insbesondere die erste Kurvenschar (5) einer ersten vorgegebenen oder dazu parallelen Meßrichtung ($x'$) und die zweite Kurvenschar (6) einer zweiten, zur vorgegebenen ersten Meßrichtung ($x'$) senkrechten Meßrichtung ($y'$) zugeordnet ist;

d) es wird der Schnittpunkt (91, 92, 93) der ersten Kurve (51, 52, 53) mit der zweiten Kurve (61, 62, 63) bestimmt, und

e) es wird von einem vorgegebenen Abszissenwert ($\sigma$ = 0) aus der Abszissenwert des Schnittpunktes (91, 92, 93) bestimmt als Meßwert für die Größe der mechanischen Eigenspannung ($\sigma_R$) in der durch eine Verbindungslinie durch den Ort (x = 0, y = 0) des sinusförmigen Magnetfeldes und durch den ersten Meßort ($x'$, $y'$ = 0) festgelegten Richtung.

2. Verfahren nach Anspruch 1, **dadurch gekennzeichnet,** daß zum Bestimmen der Richtung der mechanischen Eigenspannung ($\sigma_R$) die Meßorte ($x'$, $y'$ = 0) und ($x'$ = 0, $y'$) relativ zum Ort (x = 0, y = 0) des sinusförmigen Magnetfeldes unter Beibehaltung des Winkelabstandes von 90° verändert werden, bis an einem der beiden Meßorte ($x'$, $y'$ = 0) ein Maximum des Betrages der dritten harmonischen Komponente (i) der magnetischen Induktion gemessen wird und daß die durch den Ort (x = 0, y = 0) des sinusförmigen Magnetfeldes und den Meßort ($x'$, $y'$ = 0) des Maximums bestimmte Richtung als Richtung der mechanischen Eigenspannung ($\sigma_R$) registriert wird.

3. Verfahren nach den Ansprüchen 1 und 2, **dadurch gekennzeichnet,** daß das sinusförmige Magnetfeld mit einer Erregerspule (2) erzeugt wird.

4. Verfahren nach den Ansprüchen 1 bis 3, **dadurch gekennzeichnet,** daß zur Bestimmung der magnetischen Induktion die Induktionsspannung in Meßspulen (3,4) gemessen wird.

5. Einrichtung zur Durchführung des Verfahrens nach den Ansprüchen 1 bis 4, **dadurch gekennzeichnet,** daß einer Erregerspule (2), die an den zu prüfenden Körper (1) heranführbar ist, zwei Meßspulen (3 und 4) zugeordnet sind, die von der Achse der Erregerspule (2) aus einen Winkelabstand von 90° haben und deren Achsen parallel zur Achse der Erregerspule (2) ausgerichtet sind, und daß die Meßspulen (3 und 4) über Filter (10 und 11), die nur die dritte harmonische Komponente (i) der magnetischen Induktion durchlassen, mit einer Auswertelogik (12) verbunden sind, die mit einem Darstellungsgerät (13) verbunden ist.

6. Einrichtung nach Anspruch 5, **dadurch gekennzeichnet,** daß mit der Erregerspule (2), mit den Meßspulen (3 und 4) und mit dem Darstellungsgerät (13) ein Positioniergerät (14) in Verbindung steht.

88 P 3 5 3 2 E

FIG 1

FIG 3

58 P 3 5 3 2 **E**

FIG 2

08 P 3 5 3 2 E

FIG 4

FIG 5

FIG 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | US-A-3 636 437 (H.A. SOULANT) <br> * Zusammenfassung * <br> --- | 1-5 | G 01 N 27/72 |
| Y | US-A-3 535 625 (N.F. PRATT) <br> * Spalte 8, Zeilen 14-37; Figur 3 * <br> --- | 1-5 | |
| A | FR-A-1 098 474 (ALLMÄNNA SVENSKA ELEKTRISKA AG) <br> * Figur 4 * <br> --- | 1 | |
| A | EP-A-0 064 216 (F. TOBIAS) <br> * Erste Seite * <br> ----- | 1 | |
| | | | **RECHERCHIERTE SACHGEBIETE (Int. Cl.5)** <br><br> G 01 N <br> G 01 L |

Der vorliegende Recherchenbericht wurde für alle Patentansprüche erstellt

| Recherchenort | Abschlußdatum der Recherche | Prüfer |
|---|---|---|
| DEN HAAG | 21-08-1989 | DUCHATELLIER M.A. |